# EUROPÄISCHE PATENTSCHRIFT

(11) **EP 2 793 297 B1**
(45) Veröffentlichungstag und Bekanntmachung des Hinweises auf die Patenterteilung: **03.02.2016**
(21) Anmeldenummer: 14153743.1
(22) Anmeldetag: 04.02.2014
(51) Int. Cl.: H01M 2/34

(54) **Batterie und Kraftfahrzeug**
Battery and motor vehicle
Batterie et véhicule automobile

(30) Priorität: 14.02.2013 DE 102013202362
(43) Veröffentlichungstag der Anmeldung: 22.10.2014
(73) Patentinhaber: ROBERT BOSCH GMBH, 70442 Stuttgart (DE); Samsung SDI Co., Ltd., Yongin-si Gyeonggi-do 446-577 (KR)
(72) Erfinder: Stimm, Frank, 70563 Stuttgart (DE); Pflueger, Claus Gerald, 71706 Markröningen (DE)
(74) Vertreter: Bee, Joachim

(56) Entgegenhaltungen:
- DE-B3- 10 328 184
- GB-A- 745 859
- US-A1- 2010 207 717
- US-B1- 8 033 864

## Beschreibung

Die vorliegende Erfindung betrifft eine Batterie und ein Kraftfahrzeug. Die Batterie umfasst in einer Ausführungsform Batteriezellen, bevorzugt eine Lithium-Ionen-Batteriezelle.

### Stand der Technik

Durch verbesserte Speicherkapazität, häufigere Wiederaufladbarkeit und höhere Energiedichte finden Batterien, beispielsweise Lithium-Ionen-Zellen basierte Batterien oder Nickelmetallhydrid-Batterien, immer breitere Anwendungen. Lithium-Ionen-Zellen basierte Batterien zeichnen sich unter anderem aus durch hohe Energiedichte und eine äußerst geringe Selbstentladung.

Batterien mit geringerer Energiespeicherkapazität werden zum Beispiel für kleine tragbare elektronische Geräte wie Mobiltelefone, Laptops, Camcorder und dergleichen verwendet, während Batterien mit hoher Kapazität als Energiequelle für den Antrieb von Motoren von Kraftfahrzeugen, beispielsweise Hybrid- oder Elektro-Fahrzeugen, etc. oder als stationäre Batterien Verwendung finden.

Batterien können aus einzelnen Batteriezellen bestehen oder mehrere Batteriezellen umfassen. Dabei können die Batteriezellen zu Batteriemodulen zusammengefasst sein. Die Module umfassen dabei mindestens eine Batteriezelle, üblicherweise aber mehrere Batteriezellen und zugehörige Elektronik. Die Batteriemodule einer Batterie können seriell und/oder parallel verschaltet sein.

Batterien sind üblicherweise durch eine oder mehrere Sicherungen abgesichert. Dabei ist die Sicherung beispielsweise in einem Sicherungsgehäuse untergebracht, wobei zwei elektrische Anschlüsse der Batterie verlässlich zwei elektrische Anschlüsse der Sicherung elektrisch kontaktieren. Das Gehäuse lässt sich öffnen, so dass die elektrischen Anschlüsse der Batterie zugänglich werden, etwa zum Einsetzen oder Entnehmen der Sicherung. Zur Absicherung solcher Arbeiten kann an der Batterie ein Wartungs-/Servicestecker (Service Disconnect) vorgesehen sein, mit dem sich der Stromkreis zwischen den einzelnen Modulen in der Batterie unterbrechen lässt.

Manche Wartungsarbeiten erfordern allerdings, dass der Stromkreis bei Einsetzen oder Entnehmen der Sicherung geschlossen ist.

DE 21 42 538 beschreibt eine Sicherungsanordnung für Kabelverteilerschränke, welche einen gefahrlosen Austausch einer an ein Stromnetz angeschlossenen Sicherung ermöglicht.

### Offenbarung der Erfindung

Erfindungsgemäß werden eine Batterie gemäß Anspruch 1 und ein Kraftfahrzeug gemäß Anspruch 10 zur Verfügung gestellt, wobei die Batterie ein von außen zugängliches Sicherungsgehäuse aufweist, welches zur Herstellung eines verlässlichen elektrischen Kontakts zwischen zwei elektrischen Anschlüssen der Batterie und zwei elektrischen Anschlüssen einer Sicherung zugänglich ist. Die Batterie ist dadurch gekennzeichnet, dass das Sicherungsgehäuse einen bewegbaren Deckel umfasst, der in einer ersten Position das Sicherungsgehäuse verschließt, in einer zweiten Position genau einen der zwei elektrischen Anschlüsse zugänglich macht und in einer dritten Position genau den anderen der zwei elektrischen Anschlüsse zugänglich macht.

Dann kann der elektrische Kontakt zwischen Sicherung und Batterie nur sequenziell in einer Weise hergestellt werden, die gleichzeitiges Kontaktieren der zwei Anschlüsse der Batterie durch einen Benutzer effektiv verhindert und der Benutzer so geschützt ist. Insbesondere kann dadurch ein Service Disconnect eingespart werden.

In einer Ausführungsform ist die Bewegbarkeit des Deckels auf eine Verschiebbarkeit der zweiten und der dritten Position beschränkt.

Dann liegt die erste Position zwischen der zweiten und der dritten Position und das Sicherungsgehäuse wird erst vollständig geschlossen, nachdem einer der Anschlüsse zugänglich gemacht wurde, ehe der jeweils andere Anschluss zugänglich gemacht wird. Dies bietet einen weiter erhöhten Schutz des Benutzers.

Dabei kann die Bewegbarkeit durch ein Element beschränkt sein, welches in das Gehäuse hineinragt.

So lässt sich die Beweglichkeit leicht beschränken.

Das Element kann inelastisch sein.

Durch Wahl der Position des Elements lässt sich dann die Güte der Zugänglichkeit festlegen.

Oder das Element ist elastisch komprimierbar, wobei das Element im unkomprimierten Zustand ist, wenn der Deckel in der ersten Position ist, und in komprimierten Zuständen ist, wenn der Deckel in der zweiten oder der dritten Position ist.

Dann muss zur Zugänglichmachung einer der beiden Batterieanschlüsse eine Kraft aufgewendet werden. Der Schutz wird so noch weiter erhöht.

Das Sicherungsgehäuse und der Deckel können so ausgelegt sein, dass die Sicherung eingesetzt oder entnommen werden kann, wenn der Deckel in mindestens einer der zweiten und der dritten Position ist.

Dann lässt sich die Sicherung leicht einsetzen.

Das Sicherungsgehäuse und der Deckel können so ausgelegt sein, dass in der zweiten und der dritten Position der jeweils nicht zugänglich gemachte elektrische Anschluss für einen Prüffinger derart unzugänglich ist, dass der Prüffinger nicht gleichzeitig die zwei elektrischen Anschlüsse elektrisch kontaktieren kann.

Dann ist ein Benutzer effektiv davor geschützt, die Anschlüsse miteinander kurzzuschließen.

Das Sicherungsgehäuse kann als Teil eines Batteriegehäuses ausgebildet sein.

Dann ist die Batterie besonders leicht herstellbar.

Die Batterie kann Lithium-Ionen-Zellen umfassen.

Dann weist die Batterie eine besonders hohe Energiedichte auf.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
Figur 1 ein Ausführungsbeispiel eines Sicherungsgehäuses mit Deckel in einer ersten, das Gehäuse verschließenden Position;
Figur 2 das Ausführungsbeispiel des Sicherungsgehäuses mit dem Deckel in einer zweiten, genau einen von zwei elektrischen Anschlüssen einer Batterie zugänglich machenden Position,
Figur 3 das Ausführungsbeispiel des Sicherungsgehäuses mit dem Deckel in einer dritten, genau den anderen von den zwei elektrischen Anschlüssen der Batterie zugänglich machenden Position, und
Figur 4 das Ausführungsbeispiel des Sicherungsgehäuses mit dem Deckel in einer zweiten Position, wobei die Figur schematisch zeigt, wie bei dieser Deckelposition eine Sicherung entnommen oder eingesetzt werden kann.

### Ausführungsformen der Erfindung

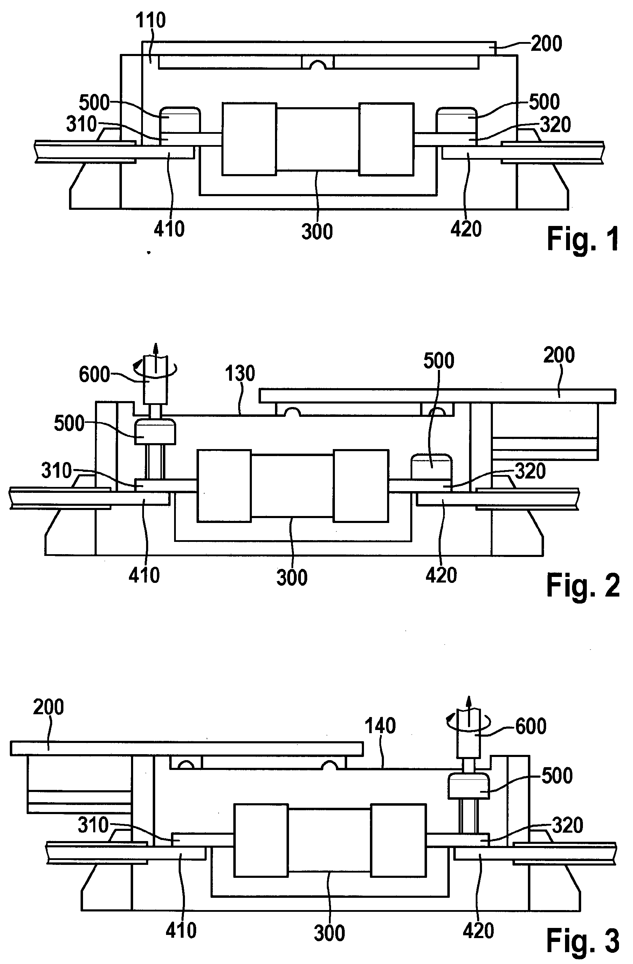

In der Figur 1 ist ein Sicherungsgehäuse mit einem Deckel 200 gezeigt. Im Sicherungsgehäuse 100 befindet sich eine Sicherung 300, die vom Gehäuse gegen Zugang geschützt ist, da sich der Deckel 200 in einer ersten Position befindet, in der der Deckel 200 eine Öffnung 110 im Gehäuse komplett verschließt.

Zwei elektrische Anschlüsse 310, 320 der Sicherung 300 sind durch Befestigungsmittel 500, beispielsweise Schrauben 500, in verlässlichem elektrischen Kontakt zu zwei elektrischen Anschlüssen 410, 420 einer Batterie, die durch Bohrungen in den Anschlüssen 310 und 410 bzw. 320 und 420 geführt und in Gewinde im Gehäuse eingeschraubt sind. Andere reversible Verbindungselemente sind möglich. Da der Deckel 200 die Öffnung 110 im Gehäuse in der ersten Position komplett verschließt, sind alle elektrischen Anschlüsse von außen unzugänglich.

In Figur 2 ist der Deckel in einer zweiten Position zu sehen, die die Anschlüsse 310 und 410 zugänglich macht, etwa zum Hinein- oder Herausdrehen der Schraube 500 mit einem Werkzeug 600. Dabei gibt der Deckel 200 in der zweiten Position nur einen Teil 130 der Öffnung 110 frei. Ein Rest der Öffnung 110 bleibt vom Deckel 200 so verdeckt, dass die Anschlüsse 320 und 420 unzugänglich bleiben. Anschluss 410, und gegebenenfalls Anschluss 310, ist also durch den freigegebenen Teil 130 der Öffnung 110 gut zugänglich, während Anschluss 420, und gegebenenfalls Anschluss 320, durch den freigegebenen Teil nicht oder zumindest nicht versehentlich erreichbar ist.

In Figur 3 ist der Deckel in einer dritten Position zu sehen, die die Anschlüsse 320 und 420 zugänglich macht, etwa zum Hinein- oder Herausdrehen der Schraube 500 mit dem Werkzeug 600. Dabei gibt der Deckel 200 in der dritten Position einen anderen Teil 140 der Öffnung 110 frei und ein anderer Rest der Öffnung 110 bleibt vom Deckel 200 so verdeckt, dass die Anschlüsse 310 und 410 unzugänglich bleiben. Anschluss 420, und gegebenenfalls Anschluss 320, ist also durch den freigegebenen anderen Teil der Öffnung 110 gut zugänglich, während Anschluss 410, und gegebenenfalls Anschluss 310, durch den freigegebenen anderen Teil nicht oder zumindest nicht versehentlich erreichbar ist.

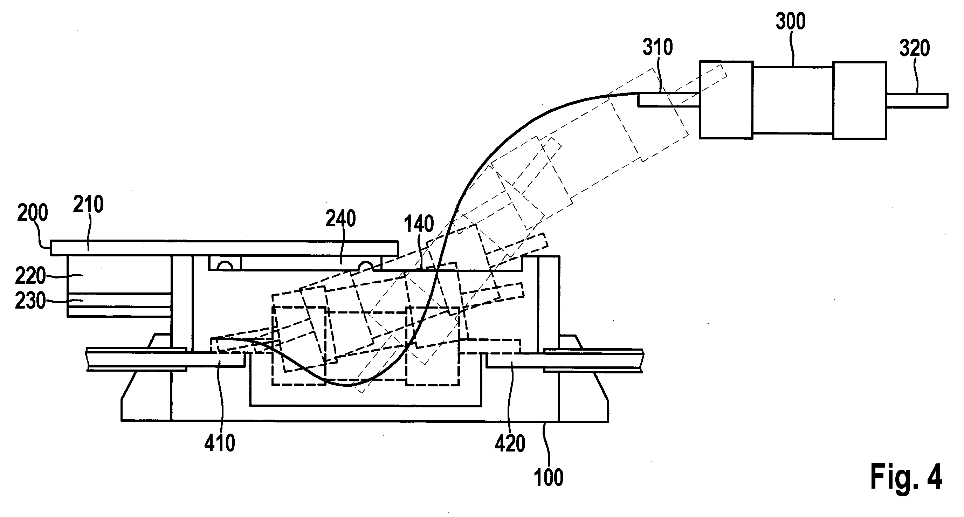

In Figur 4 ist gezeigt, wie die Dimensionierung des in den Figuren gezeigten Ausführungsbeispiels sicherstellt, dass mit dem Deckel 200 in der dritten Position die Sicherung 300 aus dem Gehäuse 100 durch den anderen Teil 140 der Öffnung 110 entnommen beziehungsweise in das Gehäuse 100 eingesetzt werden kann.

Die Dimensionierung von Gehäuse 100 und Deckel 200 kann beispielsweise anhand von Computersimulationen entsprechend bestimmt werden.

In den Figuren weist die beispielhafte Ausführungsform des Deckels 200 eine Schließplatte 210 auf, die in der ersten Position die Öffnung 110 vollständig verschließt. Eine Flächennormale der Schließplatte 210 steht im Wesentlichen senkrecht zu einer Schieberichtung, in der sich der Deckel 200 zwischen den verschiedenen Positionen verschieben lässt. Eine Führungsplatte 220 des Deckels weist eine Flächennormale auf, die im Wesentlichen senkrecht zur Flächennormale der Schließplatte 210 und senkrecht zur Schieberichtung ist. Die Führungsplatte 220 weist dabei ein Führungselement 230 auf, das mit einem geeigneten Gegenführungselement am Sicherungsgehäuse 100 so interagiert, dass die Bewegbarkeit des Deckels 220 auf Verschiebung in der Verschieberichtung beschränkt ist. Ein an der Schließplatte 210 angeordnetes Element 240, welches auf der dem Sicherungsgehäuse 200 zugewandten Seite der Schließplatte 210 angeordnet ist und in das Sicherungsgehäuse 100 hineinragt, begrenzt dabei die Verschiebbarkeit auf einen Bereich zwischen der zweiten und der dritten Position.

Das Element 240 kann inelastisch oder elastisch sein. Ein inelastisches Element 240 ist dabei so ausgebildet und an der Schließplatte angeordnet, dass seine Ausdehnung in der Verschieberichtung geringer als die Ausdehnung der Schließplatte 210 ist. Der Abstand zwischen einem Ende des inelastischen Elements 240 und einem entsprechenden, zur Verschieberichtung senkrechten Rand der Schließplatte 210 entspricht dabei der Öffnungsweite des Teils 130 der Öffnung 110 und der Abstand zwischen dem anderen Ende des inelastischen Elements 240 und einem entsprechenden, anderen zur Verschieberichtung senkrechten Rand der Schließplatte 210 entspricht dabei der Öffnungsweite des anderen Teils 130 der Öffnung. Das inelastische Element kann auch durch zwei Vorsprünge gebildet sein, die das eine und das andere Ende bilden.

Es ist auch möglich, das Element 240 in zur Verschieberichtung senkrechten Richtungen so groß auszubilden, dass die Zugänglichkeit des jeweils nicht zugänglich gemachten Anschlusses durch die Ausdehnung des Elements 240 mit beschränkt bzw. unterbunden wird, ein Einsetzen oder Entnehmen der Sicherung aber weiterhin möglich bleibt.

Ein elastisches Element 240 kann sich in einem unkomprimierten oder entspannten Zustand über die gesamte Länge des Deckels 200 in Verschieberichtung erstrecken. Dabei nimmt das elastische Element den entspannten Zustand an, wenn der Deckel 200 in der ersten Position ist. In der zweiten und in der dritten Position ist das elastische Element 240 jeweils komprimiert. Da aus der Komprimierung eine Rückstellkraft in Richtung des entspannten Zustands resultiert, ist eine die Rückstellkraft kompensierende oder übersteigende Kraft notwendig, den Deckel 200 in der zweiten oder der dritten Position zu halten, und der Deckel kehrt in die erste Position zurück, sobald keine kompensierende Kraft mehr vorliegt.

## Patentansprüche

1. Batterie mit einem von außen zugänglichen Sicherungsgehäuse (100) zur Herstellung eines verlässlichen elektrischen Kontakts zwischen zwei elektrischen Anschlüssen (410, 420) der Batterie und zwei elektrischen Anschlüssen (310, 320) einer Sicherung (300), **dadurch gekennzeichnet, dass**
das Sicherungsgehäuse (100) einen bewegbaren Deckel (200) umfasst, der in einer ersten Position das Sicherungsgehäuse (100) verschließt, in einer zweiten Position genau einen der zwei elektrischen Anschlüsse (410, 420) der Batterie zugänglich macht und in einer dritten Position genau den anderen der zwei elektrischen Anschlüsse (410, 420) der Batterie zugänglich macht.

2. Batterie nach Anspruch 1, wobei die Bewegbarkeit des Deckels (200) auf eine Verschiebbarkeit zwischen der zweiten und der dritten Position beschränkt ist.

3. Batterie nach Anspruch 2, wobei die Bewegbarkeit durch ein Element (240) beschränkt ist, welches in das Gehäuse hineinragt.

4. Batterie nach Anspruch 3, wobei das Element (240) inelastisch ist.

5. Batterie nach Anspruch 3, wobei das Element (240) elastisch komprimierbar ist und wobei das Element (240) im unkomprimierten Zustand ist, wenn der Deckel (200) in der ersten Position ist, und in komprimierten Zuständen ist, wenn der Deckel (200) in der zweiten oder der dritten Position ist.

6. Batterie nach einem der Ansprüche 1 bis 5, wobei das Sicherungsgehäuse (100) und der Deckel (200) so ausgelegt sind, dass die Sicherung (300) eingesetzt oder entnommen werden kann, wenn der Deckel (100) in zumindest einer der zweiten und der dritten Position ist.

7. Batterie nach einem der Ansprüche 1 bis 6, wobei das Sicherungsgehäuse (100) und der Deckel (200) so ausgelegt sind, dass in der zweiten und der dritten Position der jeweils nicht zugänglich gemachte elektrische Anschluss (410, 420) der Batterie für einen Prüffinger (600) derart unzugänglich ist, dass der Prüffinger (600) nicht gleichzeitig die zwei elektrischen Anschlüsse (410, 420) der Batterie elektrisch kontaktieren kann.

8. Batterie nach einem der Ansprüche 1 bis 7, wobei das Sicherungsgehäuse (100) als Teil eines Batteriegehäuses ausgebildet ist.

9. Batterie nach einem der Ansprüche 1 bis 8, wobei die Batterie Lithium-Ionen-Zellen umfasst.

10. Kraftfahrzeug mit Batterie nach einem der Ansprüche 1 bis 9.

## Claims

1. Battery comprising a fuse housing (100), which is accessible from the outside, for establishing reliable electrical contact between two electrical connections (410, 420) of the battery and two electrical connections (310, 320) of a fuse (300), **characterized in that**
the fuse housing (100) has a movable cover (200) which closes the fuse housing (100) in a first position, makes precisely one of the two electrical connections (410, 420) of the battery accessible in a second position, and makes precisely the other of the two electrical connections (410, 420) of the battery accessible in a third position.

2. Battery according to Claim 1, wherein the ability of the cover (200) to move is restricted to an ability to shift between the second and the third position.

3. Battery according to Claim 2, wherein the ability to move is restricted by an element (240) which projects into the housing.

4. Battery according to Claim 3, wherein the element (240) is inelastic.

5. Battery according to Claim 3, wherein the element (240) is elastically compressible, and wherein the element (240) is in the uncompressed state when the cover (200) is in the first position, and is in compressed states when the cover (200) is in the second or the third position.

6. Battery according two one of Claims 1 to 5, wherein the fuse housing (100) and the cover (200) are designed such that the fuse (300) can be inserted or removed when the cover (100) is in at least one of the second and the third position.

7. Battery according to one of Claims 1 to 6, wherein the fuse housing (100) and the cover (200) are designed such that, in the second and the third position, the electrical connection (410, 420) of the battery which has respectively not been made accessible is inaccessible to a test finger (600) in such a way that the test finger (600) cannot make electrical contact with the two electrical connections (410, 420) of the battery at the same time.

8. Battery according to one of Claims 1 to 7, wherein the fuse housing (100) is in the form of part of a battery housing.

9. Battery according to one of Claims 1 to 8, wherein the battery comprises lithium-ion cells.

10. Motor vehicle comprising a battery according to one of Claims 1 to 9.

## Revendications

1. Batterie comportant un boîtier de coupe-circuit accessible extérieurement (100) destiné à établir un contact électrique fiable entre deux bornes électriques (410, 420) de la batterie et deux bornes électriques (310, 320) d'un coupe-circuit (300), **caractérisé en ce que**
le boîtier de coupe-circuit (100) comprend un capot mobile (200) qui referme le boîtier de coupe-circuit (100) à une première position, qui rend accessible exactement l'une des deux bornes électriques (410, 420) de la batterie à une deuxième position et qui rend accessible exactement les autres deux bornes électriques (410, 420) de la batterie à une troisième position.

2. Batterie selon la revendication 1, dans laquelle la mobilité du capot (200) est limitée à une aptitude à coulisser entre les deuxième et troisième positions.

3. Batterie selon la revendication 2, dans laquelle la mobilité est limitée par un élément (240) qui pénètre dans le boîtier.

4. Batterie selon la revendication 3, dans laquelle l'élément (240) est inélastique.

5. Batterie selon la revendication 3, dans laquelle l'élément (240) peut être comprimé élastiquement et dans laquelle l'élément (240) est dans l'état non comprimé lorsque le capot (200) est à la première position et dans l'état comprimé lorsque le capot (200) est à la deuxième ou à la troisième position.

6. Batterie selon l'une quelconque des revendication 1 à 5, dans laquelle le boîtier de coupe-circuit (100) et le capot (200) sont conçus de manière à ce que le coupe-circuit (300) puisse être inséré ou retiré lorsque le capot (100) est au moins dans l'une des deuxième et troisième positions.

7. Batterie selon l'une quelconque des revendication 1 à 6, dans laquelle le boîtier de coupe-circuit (100) et le capot (200) sont conçus de manière à ce que, aux deuxième et troisième positions, la borne électrique (410, 420) rendue accessible de la batterie ne soit pas accessible à une sonde d'essai (600) de manière à ce que la sonde d'essai (600) ne puisse pas être mise simultanément en contact électrique avec les deux bornes électriques (410, 420) de la batterie.

8. Batterie selon l'une quelconque des revendication 1 à 7, dans laquelle le boîtier de coupe-circuit (100) est réalisé en tant que partie d'un boîtier de batterie.

9. Batterie selon l'une quelconque des revendication 1 à 8, dans laquelle la batterie comprend des cellules au lithium-ion.

10. Véhicule à moteur comportant une batterie selon l'une quelconque des revendications 1 à 9.
